# EUROPEAN PATENT APPLICATION

(11) **EP 1 739 962 A2**
(43) Date of publication of application: **03.01.2007**
(21) Application number: 06116104.8
(22) Date of filing: 26.06.2006
(51) Int. Cl.: H04N 5/445

(54) **Broadcast receiver and method of providing a location guide service in a broadcast receiver**

(30) Priority: 29.06.2005 KR 2005056946
(71) Applicant: Samsung Electronics Co., Ltd., Suwon-si 442-742 Gyeonggi-Do (KR)
(72) Inventor: Youm, Sun-hee, Gyeonggi-do (KR); Park, Sung-il, Gyeonggi-do (KR)
(74) Representative: Walaski, Jan Filip

(57) **Abstract**

A method for providing a location guide service for a place related to a broadcasting program by using electronic program guide (EPG) data and a broadcasting receiver for the method are provided. The method includes: decoding EPG data including location information of at least one place related to each broadcasting program; outputting the decoded electronic program guide data; detecting location information of at least one place related to the selected broadcasting program in the decoded electronic program guide data; and outputting the detected location information. The method may further include detecting and outputting a shortest path between the current location of a broadcasting receiver and a place related to the selected broadcasting program, based on the detected location information, the current location information of the broadcasting receiver, and traffic information.

## Description

The present invention relates to a broadcast receiver, and more particularly, to a method of providing a guide service related to a broadcast program by using electronic program guide (EPG) data, and a broadcast receiver for the method.

EPG data is guide information for a program to be broadcast at a predetermined time. However, most of the EPG data currently provided includes guide information helping viewers select a desired program, such as the genre, title, channel number, and broadcast time of the broadcast program, and description of the broadcast program.

Accordingly, most broadcast receivers capable of receiving EPG data are providing program guide services for programs that viewers can watch.

However, as the viewer environment has changed in line with the recent development of communication technologies, a variety of guide services relating to broadcast programs are being demanded. That is, by shifting away from the passive viewer environment in which a broadcast program is received in a fixed place, the viewer environment has become a more active one, such as an environment in which a broadcast program can be watched while the user is moving, or viewers can participate in a variety of events provided in a place related to a broadcast program. Accordingly, more diversified guide services related to a broadcast program capable of reflecting this changing viewer environment are needed.

The present invention provides a method of providing a location guide service of a place related to a broadcast program by using electronic program guide (EPG) data, and a broadcast receiver for the method.

The present invention also provides a method of providing a location moving guide service helping a user move to a place related to a broadcast program, based on the location information of the place related to the broadcast program provided by using EPG data, the location information of the broadcast receiver, and traffic information, and a broadcast receiver for the method.

According to an aspect of the present invention, there is provided a method of providing a location guide service in a broadcasting receiver, including: decoding electronic program guide data including location information of at least one place related to each broadcasting program; outputting the decoded electronic program guide data; detecting location information of at least one place related to the selected broadcasting program in the decoded electronic program guide data; and outputting the detected location information.

According to another aspect of the present invention, there is provided a method of providing a location guide service in a broadcasting receiver, including: receiving and decoding electronic program guide data including location information of at least one place related to each broadcasting program; outputting electronic program guide data to select a broadcasting program based on the decoded electronic program guide data; and if a broadcasting program to receive a location guide service based on the output electronic program guide data is selected, detecting the current location information of the broadcasting receiver; detecting location information of at least one place related to the selected broadcasting program in the decoded electronic program guide data; obtaining traffic information on at least one path between at least one place related to the selected broadcasting program and the current location of the broadcasting receiver; and detecting a shortest path between the at least one place related to the broadcasting program and the current location of the broadcasting receiver based on the location information of the place related to the selected broadcasting program, the current location information of the broadcasting receiver, and the traffic information, and outputting guide information on the detected shortest path.

According to still another aspect of the present invention, there is provided a broadcasting receiver including: a reception unit receiving electronic program guide data including location information of at least one place related to each broadcasting program; a decoder decoding the received electronic program guide data; an output unit outputting electronic program guide data to select a broadcasting program and/or location information of at least one place related to a selected broadcasting program; an information input unit through which a user inputs information; and a control unit detecting electronic program guide data to select the broadcasting program and location information of at least one place related to the selected broadcasting program in the electronic program guide data decoded in the decoder, and outputting the data and information to the output unit.

According to yet still another aspect of the present invention, there is provided a broadcasting receiver including: a reception unit receiving electronic program guide data including location information of at least one place related to each broadcasting program; a decoder decoding the received electronic program guide data; a location information detection unit detecting the current location information of the broadcasting receiver; an output unit outputting electronic program guide data to select a broadcasting program and location information of at least one place related to a selected broadcasting program; an information input unit through which a user inputs information; a traffic information providing unit providing traffic information on at least one path between the place related to the selected broadcasting program and the current location of the broadcasting receiver; and a control unit detecting electronic program guide data to select the broadcasting program and location information of at least one place related to the selected broadcasting program in the electronic program guide data decoded in the decoder, and outputting the data and information to the output unit, and detecting traffic information on at least one path based on the location information of the at least one place related to the selected broadcasting program, the current location information of the broadcasting receiver, and the traffic information, and outputting guide information on the detected traffic information to the output unit.

The above and other aspects of the present invention will become more apparent by describing in detail exemplary embodiments thereof with reference to the attached drawings in which:
Figure 1 is a functional block diagram of a broadcast receiver according to an exemplary embodiment of the present invention;
Figure 2 illustrates an example of the structure of EPG data;
Figure 3 illustrates an example of a path between a current location of a broadcasting receiver and a place related to a selected broadcast program;
Figure 4 is a functional block diagram of a broadcast receiver according to another exemplary embodiment of the present invention;
Figure 5 is an operation flowchart of a method for providing a location guide service according to another exemplary embodiment of the present invention;
Figure 6 is an operation flowchart of a method for providing a location guide service according to another exemplary embodiment of the present invention; and
Figure 7 is an operation flowchart of a method for providing a location guide service according to another exemplary embodiment of the present invention.

Exemplary embodiments of the present invention will now be described more fully with reference to the accompanying drawings.

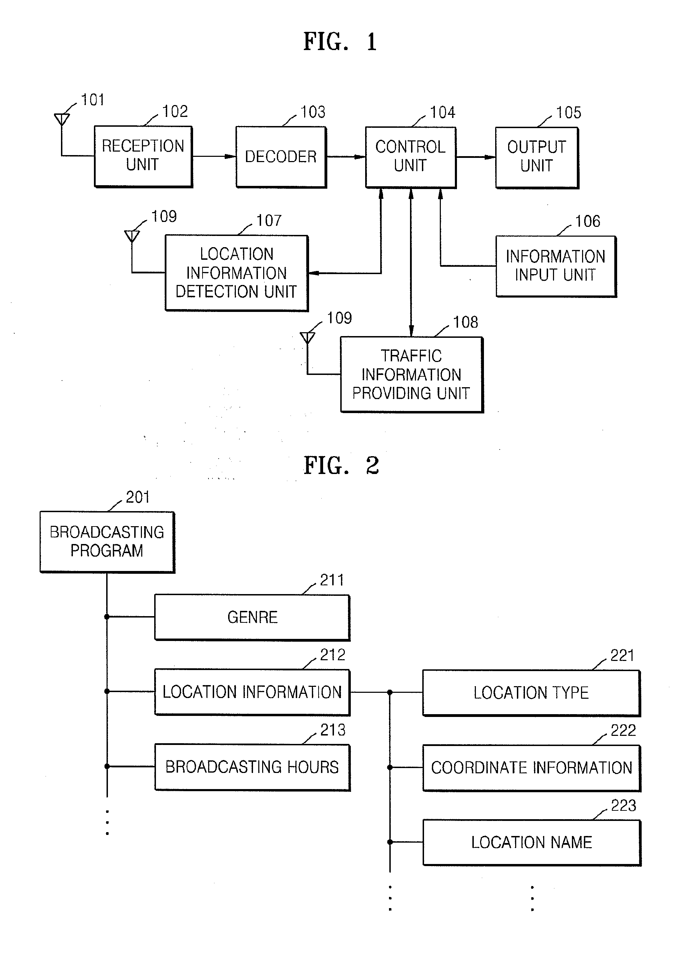

Referring to Figure 1, a broadcast receiver according to an exemplary embodiment of the present invention includes antennas 101 and 109, a reception unit 102, a decoder 103, a control unit 104, an output unit 105, an information input unit 106, a location information detection unit 107, and a traffic information providing unit 108.

The antenna 101 receives a broadcast signal transmitted by a broadcast station. If the broadcast receiver is a digital video broadcast receiver, the antenna 101 is one that can receive a broadcast signal transmitted by a broadcast station in a mobile environment.

The antenna 109 is a satellite antenna receiving the current location information of the broadcast receiver and traffic information based on satellite communications. The reception unit 102 receives EPG data from a broadcast signal received through the antenna 101.

The EPG data includes location information of at least one place related to each broadcast program. This means that when a broadcast station or a broadcast provider transmits a broadcast signal containing the EPG data, location information of at least one place related to each broadcast program is included in the EPG data. The reception unit 102 can be a unit receiving a broadcast signal containing the EPG data.

The decoder 103 decodes the EPG data received through the reception unit 102. The received EPG data may have a structure as shown in Figure 2. Figure 2 illustrates an example of data hierarchically classified based on the types of information desired to be provided. That is, in the EPG data, guide information types, such as a genre 211, location information 212, and broadcasting hours 213, which can be provided are defined in a lower layer of a broadcast program 201 that a viewer can watch, and actual guide information can be defined in a lower layer of the guide information type layer. For example, in a lower layer of the location information 212, actual guide information, such as a location type 221, coordinate information 222, and a location name 223, can be defined.

The location type 221 is information defining whether a place related to a broadcast program is an open place or a closed place. The coordinate information 222 is information on coordinates of the corresponding place on a map, and the location name 223 is the name of the place. For example, when broadcast program "A" is realized in a place known as Hoam Art Hall, the location type is "closed", the coordinate information is coordinate information of Hoam Art Hall on a map, and the location name is "Hoam Art Hall". Also, address information defined in a text form can be further defined. That is, the address information of "Hoam Art Hall" can be further defined. If there are a plurality of places related to a broadcast program, location information of each place can be defined. For example, if a broadcast program is a drama, there may be a plurality of places related to the program.

The decoder 103 transmits the decoded EPG data to the control unit 104.

The control unit 104 outputs, to the output unit 105, EPG data to select a broadcast program according to information input through the information input unit 106, in the decoded EPG data. Also, if a broadcast program is selected by the information input unit 106 in order to receive a location guide service, the control unit 104 detects location information of at least one place related to the broadcast program selected in the decoded EPG data. By controlling the location information detection unit 107 and traffic information providing unit 108, the control unit 104 obtains the current location information of the broadcast receiver and traffic information.

The control unit 104 may output the detected location information of at least one place related to the broadcast program to the output unit 105. At this time, the output location information can be expressed as text information including the location name, the location type and address information. If the location type is a closed place and a ticket should be issued, the control unit 104 can also output to the output unit 105, information indicating that there is a linked guide service. In addition, if there is a linked guide service, the control unit 104 can output to the output unit 105, link information on a link from which the corresponding guide service information can be provided.

Meanwhile, the control unit 104 detects traffic information related to at least one path between at least one place related to the selected broadcast program and the current location of the broadcast receiver, based on the location information of the at least one place related to the selected broadcast program, the current location information of the broadcast receiver, and traffic information. The traffic information related to at least one path may be a shortest path.

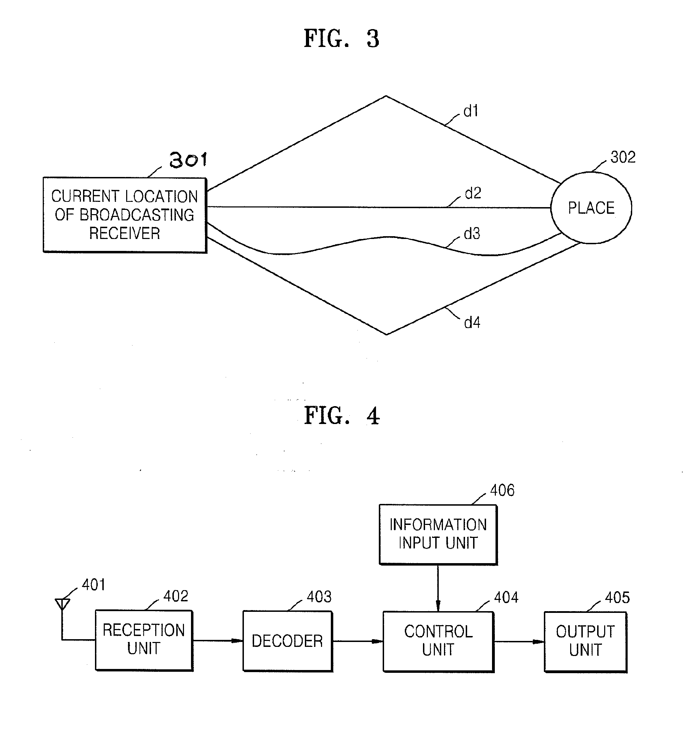

That is, if there are paths d1 through d4 between the current location 301 of the broadcasting receiver and the place 302 related to the broadcasting program as shown in Figure 3, the control unit 104 detects a shortest path based on the traffic information of paths d1 through d4. At this time, the traffic information includes the distance information and real time traffic information. Accordingly, the control unit 104 detects a required time for each path of d1 through d4 based on the distance between the current location 301 of the broadcasting receiver and the place 302 related to the broadcasting program and current traffic information, and detects a path having a shortest detected required time, as the shortest path. For example, if a path having a shortest distance is d2 but a path having a minimum required time is d3 in Figure 3, the control unit 104 detects the path d3 as the shortest path. The control unit 104 outputs guide information on the detected shortest path to the output unit 105. The guide information on the shortest path can be provided from the traffic information providing unit 108. The guide information may be in a text format or a map.

Also, if another guide service related to the location information of the at least one place exists, the control unit 104 may output information introducing the presence of the other guide service to the output unit 105.

The output unit 105 controlled by the control unit 104 outputs EPG data to select a broadcast program and/or location information of at least one place related to a selected broadcast program, and guide information on a shortest path. Also, the output unit 105 may output the other guide service related to the location information of the at least one place. The output unit 104 can be a display apparatus capable of outputting audio signals.

The information input unit 106 inputs information desired to be input by a user, to the control unit 104. That is, in the EPG data output on the output unit 105, information to select a broadcast program whose location guide service is desired to be received can be input or information to request a guide service linked to a place related to the selected broadcast program can be input through the information input unit 106.

The location information detection unit 107 detects the current location information of the broadcast receiver based on the coordinate information received through the antenna 109 according to the request of the control unit 104. Since the antenna 109 is one capable of satellite communication as described above, the location information detection unit 107 can detect the location information of the broadcast receiver with a structure using a global positioning system (GPS) module. The detected current location information of the broadcast receiver is provided to the control unit 104. If a broadcast program whose location guide service is desired to be provided is selected based on the EPG data output on the output unit 105, the control unit 104 can request the location information detection unit 107 to detect the current location information of the broadcast receiver.

According to a request of the control unit 104, the traffic information providing unit 108 provides traffic information on at least one path between a place related to the selected broadcast program and the current location of the broadcast receiver, based on the traffic information received through the antenna 109. As described above with reference to Figure 3, the traffic information can include information on each path of d1 through d4 existing between the current location 301 of the broadcasting receiver and the place 302 related to the broadcast program, the distance of each path, and real time traffic information.

Though Figure 3 shows an example of paths between the current location 301 of the broadcasting receiver and one place 302, if there are a plurality of places, the traffic information providing unit 108 can provide the distance of a path between each of the places and the current location of the broadcast receiver, real time traffic information and guide information, as traffic information.

Figure 4 is a functional block diagram of a broadcast receiver according to another exemplary embodiment of the present invention. Referring to Figure 4, the broadcast receiver includes an antenna 401, a reception unit 402, a decoder 403, a control unit 404, an output unit 405, and an information input unit 406.

The antenna 401, reception unit 402, decoder 403, output unit 405, and information input unit 406 are constructed and operated in the same manner as the antenna 101, reception unit 102, decoder 103, output unit 105, and information input unit 106, respectively, shown in Figure 1.

According to information input through the information input unit 406, the control unit 404 outputs to the output unit 405, EPG data to select a broadcast program in the EPG data decoded in the decoder 403. Also, according to information input through the information input unit 406, the control unit 404 detects location information of a place related to a broadcast program selected based on the EPG data output on the output unit in the decoded EPG data and outputs the detected location information to the output unit 405. The detection of the location information of the place related to the broadcast program selected in the decoded EPG data can rely on a search based on the EPG data structure shown in Figure 2. If there are a plurality of places related to the selected broadcast program, the control unit 404 detects the location information on the plurality of places in the decoded EPG data and outputs the location information to the output unit 405. The location information output to the output unit 405 can have a text format including the location type, location name, and address information defined in Figure 2.

A broadcast signal transmission apparatus (not shown) can have a structure including the location information of a place related to each broadcast program in EPG data and transmitting the information to each broadcast receiver in order for the broadcast receivers shown in Figures 1 and 4 to receive EPG data containing location information of the place related to each broadcast program. For example, when the EPG data has the structure as shown in Figure 2, the broadcast signal transmission apparatus (not shown) sets a guide information type corresponding the location information 212 in a lower layer of each broadcast program 201 defined in the EPG data, and generates EPG data to which the location information on the corresponding place is added in a lower layer of the set location information 212. Then, the broadcast signal transmission apparatus (not shown) can include the generated EPG data in a broadcast signal and transmit the EPG data to each broadcast receiver.

There may be a plurality of places related to each of the broadcast programs. Also, the method of including the location information of a place related to each broadcast program in the EPG data by the broadcast signal transmission apparatus (not shown) can be implemented in a modified format with respect to the structure of the EPG data.

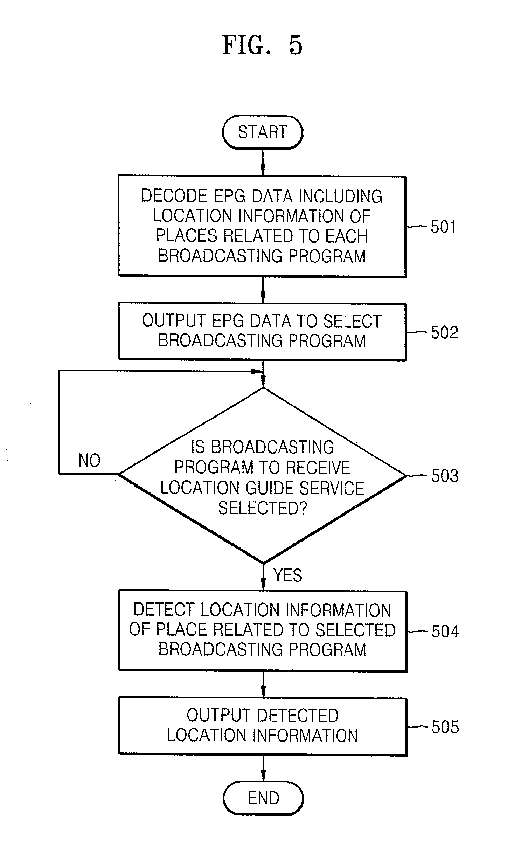

Figure 5 is an operation flowchart of a method for providing a location guide service according to another exemplary embodiment of the present invention. The operation flowchart of Figure 5 will now be explained based on the broadcast receiver shown in Figure 4.

First, the broadcast receiver decodes EPG data included in a received broadcast signal using the decoder 403 in operation 501. The EPG data includes the location information of a place related to each broadcast program.

The broadcast receiver outputs EPG data to select a broadcast program based on the decoded EPG data, to the output unit 405 in operation 502.

If a broadcast program whose location guide service is to be received is selected by the information input unit 406 based on the EPG data output by the output unit 405 in operation 503, the control unit 404 of the broadcast receiver detects location information related to the broadcast program selected in the decoded EPG data in operation 504. At this time, the location information related to the broadcast program is the location information of a place related to the broadcast program. The location information of the place related to the selected broadcast program is as described above with reference to Figure 4.

Next, the control unit 404 outputs the detected location information to the output unit 405 in operation 505. The location information output to the output unit 405 is as described above with reference to Figure 4.

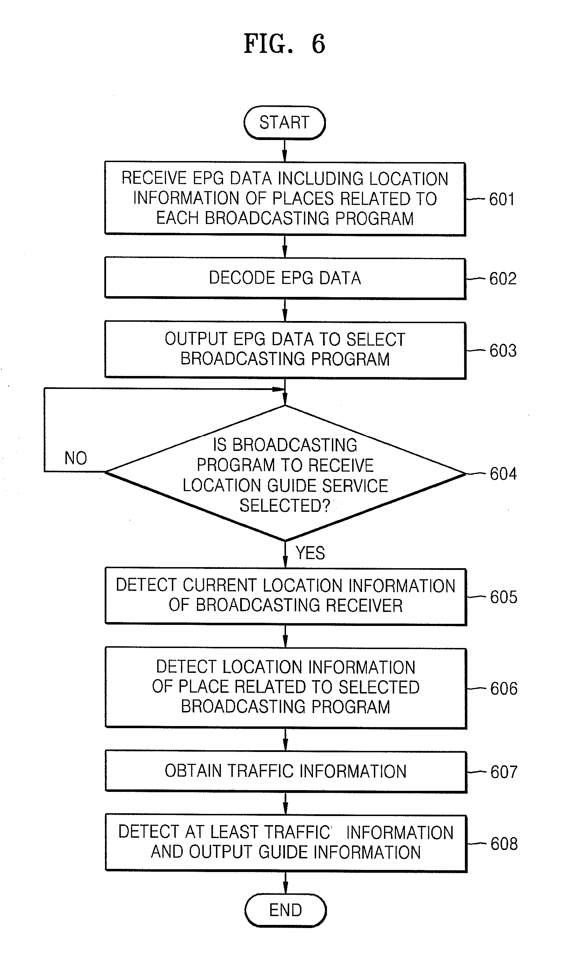

Figure 6 is an operation flowchart of a method for providing a location guide service according to another exemplary embodiment of the present invention. The operation flowchart of Figure 6 will now be explained based on the broadcast receiver shown in Figure 1.

When a broadcast signal is received through the antenna 101, the reception unit 102 receives EPG data containing location information of a place related to each broadcast program in operation 601. The received EPG data is transmitted to the decoder 103 and decoded in operation 602.

According to information input through the information input unit 106, the control unit 104 detects EPG data to select a broadcast program in the decoded EPG data and outputs the detected EPG data in operation 603.

When information on selection of a broadcast program whose location guide service is to be received, based on the output EPG data to select a broadcast program, is input in operation 604, the control unit 104 detects the current location information of the broadcast receiver, by controlling the location information detection unit 107 in operation 605.

Next, the control unit 104 detects the location information of the place related to the broadcast program selected in the decoded EPG data in operation 606. If there are a plurality of places related to the selected broadcast station, the location information on the plurality of places is detected.

Also, the control unit 104 provides the location information of the place related to the selected broadcast program and the current location information of the broadcast receiver to the traffic information providing unit 108. Then, the traffic information providing unit 108 compares the current location information of the broadcast receiver with the location information of the place related to the selected broadcast program and detects one or more traffic information items.

That is, the traffic information providing unit 108 obtains traffic information on all paths existing between the location information of the place related to the selected broadcast program and the current location information of the broadcast receiver in operation 607. The traffic information to be obtained is the same as described above with reference to Figure 1.

The control unit 104 detects one or more traffic information items between the place related to the broadcast program and the current location of the broadcast receiver, based on the location information of the place related to the selected broadcast program, the current location information of the broadcast receiver, and the traffic information. Guide information on the detected traffic information items is output in operation 608. The output guide information may be a shortest path. As described above, the shortest path is detected based on the actual required time in each path considering the traffic. The guide information on the shortest path has a format as described above with reference to Figure 1.

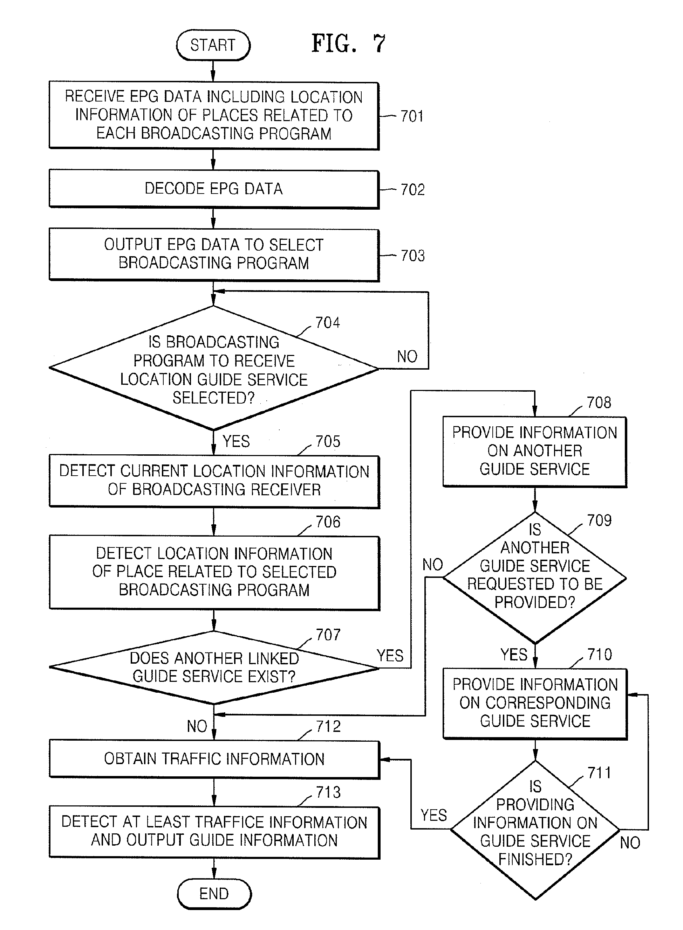

Figure 7 is an operation flowchart of a method for providing a location guide service according to another exemplary embodiment of the present invention. The operation flowchart of Figure 7 will now be explained based on the broadcast receiver shown in Figure1.

When a broadcast signal is received through the antenna 101, the reception unit 102 receives EPG data containing location information of a place related to each broadcast program in operation 701. The received EPG data is transmitted to the decoder 103 and decoded in operation 702.

According to information input through the information input unit 106, the control unit 104 detects EPG data to select a broadcast program in the decoded EPG data and outputs the detected data in operation 703.

When information on selection of a broadcast program whose location guide service is to be received, based on the output EPG data to select a broadcast program, is input in operation 704, the control unit 104 detects the current location information of the broadcast receiver, by controlling the location information detection unit 107 in operation 705.

Next, the control unit 104 detects the location information of the place related to the broadcast program selected in the decoded EPG data in operation 706. If there are a plurality of places related to the selected broadcast station, the location information on the plurality of places is detected.

At this time, if there is another guide service linked to the place related to the broadcast program corresponding to the detected location information in operation 707, the presence of the another guide service is notified in operation 708. When the place related to the corresponding broadcast program is Hoam Art Hall, the another guide service may be a ticketing service.

When the user requests the another guide service through the information input unit 106 in operation 709, the control unit 104 provides the corresponding guide service information in operation 710.

If there is no other guide services linked to the place related to the selected broadcast program in operation 707 or if it is determined in operation 711 that providing of the guide service information is finished, the control unit 104 provides the location information of the place related to the selected broadcast program and the current location information of the broadcast receiver, to the traffic information providing unit 108. Then, the traffic information providing unit 108 compares the current location information of the broadcast receiver with the location information of the place related to the selected broadcast program and detects one or more traffic information items. That is, the traffic information providing unit 108 obtains traffic information on all paths existing between the location information of the place related to the selected broadcast program and the current location information of the broadcast receiver in operation 712. The traffic information to be obtained is the same as described above with reference to Figure 1.

The control unit 104 detects one or more traffic information items between the place related to the broadcast program and the current location of the broadcast receiver, based on the location information of the place related to the selected broadcast program, the current location information of the broadcast receiver, and the traffic information. Guide information on the detected traffic information items is output in operation 713. The output guide information may be a shortest path. As described above, the shortest path is detected based on the actual required time in each path considering the traffic. The guide information on the shortest path has a format as described above with reference to Figure 1.

A program to perform the method of providing a location guide service according to the present invention can be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

According to the present invention as described above, by providing information on a place related to a broadcast program using EPG data, more diversified guide services can be provided to broadcast receiver users, and the broadcast provider can easily advertise a variety of events based on a place related to a broadcast program, to broadcast receiver users, and can also easily induce active participation by the broadcast receiver users.

In addition, by providing information on a shortest path considering traffic situation, between the current location of the broadcast receiver and the place related to the broadcast program, the users can receive help when moving to the place related to the broadcast program.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of providing a location guide service in a broadcast receiver, the method comprising:
decoding electronic program guide EPG data;
detecting location information of at least one place related to a selected broadcast program in the decoded electronic program guide data; and
outputting the location information.

2. The method of claim 1, wherein the location information comprises at least one of a name of the place, a type of the place and an address of the place.

3. The method of claim 1 or 2, further comprising detecting a location of the broadcast receiver.

4. The method of claim 3, further comprising detecting traffic information on at least one path between the location of the broadcast receiver and a location of the at least one place related to the selected broadcast program, wherein the outputting of the location information comprises outputting the traffic information.

5. The method of claim 4, wherein the traffic information is a shortest path between the location of the broadcast receiver and the location of the at least one place related to the selected broadcast program.

6. The method of any one of the preceding claims, further comprising, if another guide service related to the detected location information exists, providing guide information indicating that the other guide service exists.

7. A broadcast receiver comprising:
means for decoding electronic program guide EPG data;
means for detecting location information of at least one place related to a selected broadcast program in the decoded electronic program guide data; and
means for outputting the location information.

8. A broadcast receiver comprising:
a reception unit which receives electronic program guide data;
a decoder which decodes the electronic program guide data which is received by the reception unit and outputs decoded electronic program guide data;
a control unit which receives and outputs the decoded electronic program guide data output by the decoder;
an output unit which receives and outputs the electronic program guide data which is output by the control unit; and
an information input unit through which a user inputs information,
wherein the control unit receives the information input through the information unit, detects in the decoded electronic program guide data, location information of at least one place related to a broadcasting program which is selected based on the information input through the information unit by the user, and outputs the location information, and
wherein the output unit receives and outputs the location information which is output by the control unit.

9. The broadcasting receiver of claim 7 or 8, wherein the location information comprises at least one of a name of the place, a type of the place and an address of the place.

10. A broadcast receiver comprising:
a reception unit which receives electronic program guide data;
a decoder which decodes the electronic program guide data which is received by the reception unit and outputs decoded electronic program guide data;
a location information detection unit which detects and outputs a location of the broadcast receiver;
a control unit which receives the decoded electronic program guide data output by the decoder and the location of the broadcast receiver output by the location information detection unit, and outputs the electronic program guide data;
an output unit which receives and outputs the electronic program guide data which is output by the control unit;
an information input unit through which a user inputs information, wherein the control unit receives the information input through the information unit, and
detects in the decoded electronic program guide data, location information of at least one place related to a broadcast program which is selected based on the information input through the information unit by the user; and
a traffic information providing unit which provides traffic information on at least one path between the at least one place related to the selected broadcast program and a location of the broadcast receiver, wherein the control unit detects at least one traffic information item on the at least one path based on the location information of the at least one place related to the selected broadcast program, the location of the broadcast receiver, and the traffic information, and outputs guide information on the detected traffic information item,
wherein the output unit receives and outputs the guide information which is output by the control unit.

11. The broadcast receiver of claim 10, wherein the traffic information item on at least one path is a shortest path.

12. The broadcast receiver of claim 10, wherein if another guide service related to the location information of the at least one place exists, the control unit outputs information indicating the other guide service exists to the output unit.

13. A method of providing a location guide service in a broadcast receiver, the method comprising:
decoding electronic program guide data included in a received broadcast signal;
detecting location information of at least one place related to a selected broadcast program in the decoded electronic program guide data;
detecting a current location of the broadcast receiver;
determining traffic information related to at least one path between the current location of the broadcast receiver and a location of the place related to the selected broadcast program; and
outputting the traffic information.

14. The method of claim 13, wherein the determining the traffic information comprises determining a shortest path between the current location of the broadcast receiver and the place related to the selected broadcast program.
